# EUROPÄISCHE PATENTSCHRIFT

(11) **EP 0 665 268 B1**
(45) Veröffentlichungstag und Bekanntmachung des Hinweises auf die Patenterteilung: **03.09.1997**
(21) Anmeldenummer: 94120845.6
(22) Anmeldetag: 28.12.1994
(51) Int. Cl.: C08L 9/06, B60C 1/00

(54) **Kautschukmischung, daraus hergestellte Reifenlauffläche und Reifen mit dieser Reifenlauffläche**
Rubber composition, tread mad therefrom and tyres containing these treads
Composition de caoutchouc, bande de roulement fabriquée à partir de celle-ci et pneumatiques avec ces bandes de roulement

(30) Priorität: 24.01.1994 DE 4401934
(43) Veröffentlichungstag der Anmeldung: 02.08.1995
(73) Patentinhaber: SP REIFENWERKE GMBH, 63450 Hanau (DE)
(72) Erfinder: Fuchs, Hans-Bernd, Dr., D-63755 Alzenau-Hörstein (DE); Dietrich, Günther, D-60431 Frankfurt am Main (DE); Steinbrecht, Ulrich, Dr., D-64372 Ober-Ramstadt (DE)
(74) Vertreter: Dipl.-Phys.Dr. Manitz Dipl.-Ing. Finsterwald Dipl.-Ing. Grämkow Dipl.-Chem.Dr. Heyn Dipl.-Phys. Rotermund Morgan B.Sc.(Phys.)

(56) Entgegenhaltungen:
- EP-A- 0 349 472
- EP-A- 0 438 966
- EP-A- 0 645 423
- US-A- 5 336 730

## Beschreibung

Die vorliegende Erfindung betrifft eine mit Schwefel vulkanisierbare Kautschukmischung, die mindestens ein Elastomer, mindestens einen Füllstoff, übliche Zusätze sowie ein Vulkanisationssystem enthält. Ferner betrifft die Erfindung Reifenlaufflächen, die diese Kautschukmischung enthalten, sowie Reifen mit einer Reifenlauffläche, die die vulkanisierte Kautschukmischung enthält.

Die nicht vorveröffentlichte EP-A-0 645 423 beschreibt Reifen mit einer Lauffläche, die 60 bis 90 Gew.-Teile Isopren-Butadien-Styrol-Terpolymer mit einer Glasübergangstemperatur von -25°C bis -50°C und mit einem Gehalt von 20 bis 65 Gew.-% Isopren, 10 bis 50 Gew.-% Butadien und 6 bis 40 Gew.-% Styrol, 10 bis 40 Gew.-Teile cis 1,4-Polybutadien, 50 bis 110 Gew.-Teile Kieselsäure und ggf. Ruß enthält. Die nicht vorveröffentlichte EP-A-0 632 094 beschreibt Reifen mit einer Lauffläche, die 100 Gewichtsteile Elastomer sowie 5 bis 90 Gewichtsteile Kieselsäure und ggf. Ruß enthält. Als Elastomer wird unter anderem Isopren-Butadien-Styrol-Terpolymer genannt.

Aus der EP-A-0 438 966 sind Isopren-Butadien-Styrol-Terpolymere mit einer Glasübergangstemperatur von -10°C bis -75°C und mit einem Gehalt von 20 bis 65 Gew.-% Isopren, 10 bis 50 Gew.-% Butadien und 6 bis 40 Gew.-% Styrol bekannt. Diese Terpolymere werden in Laufflächen von Reifen eingesetzt. Die Laufflächen enthalten 20 bis 90 Gew.-Teile des Terpolymers, 10 bis 80 Gew.-Teile wenigstens eines weiteren Elastomers sowie weitere Zusätze, unter denen unter anderem Kieselsäure genannt ist. Ähnliche Terpolymere und Reifenlaufflächen werden in der EP-A-0 349 472 beschrieben.

Die bei Reifen gewünschten Eigenschaften sind nur schwer gleichzeitig zu erreichen, da sie teilweise einander widersprechen. So bewirken Maßnahmen, die zu einer Verringerung des Rollwiderstands führen, eine Abnahme der Abriebfestigkeit. Der teilweise oder völlige Ersatz von Ruß durch den Füllstoff Kieselsäure z.B. verringert zwar den Rollwiderstand des Reifens, verschlechtert aber dessen Abriebfestigkeit. in der EP 0 299 074 B1 wird zur Vermeidung dieser Verschlechterung vorgeschlagen, für Kautschukmischungen, die Kieselsäure als Füllstoff in großen Anteilen enthalten, Polymere zu verwenden, die mit einer speziellen Silanverbindung modifiziert sind. Diese Maßnahme ist wegen der Verwendung spezieller Silanverbindungen für eine industrielle Anwendung ungünstig.

Um diesen Nachteil zu vermeiden, wird in der EP 0 501 227 A1 eine Kautschukmischung vorgeschlagen, die ein durch Lösungspolymerisation in einem Kohlenwasserstofflösemittel hergestelltes Copolymer aus konjugiertem Dien und vinylaromatischer Verbindung, eine ganz spezielle Kieselsäure, die z.B. nach dem in der EP 0 157 703 B1 beschriebenen Verfahren hergestellt ist, üblicherweise verwendete Zusätze sowie ein Vulkanisationssystem enthält. Diese Kautschukmischung wird in bekannter Weise durch stufenweises Vermischen der Bestandteile hergestellt, wobei Temperaturen eingehalten werden, bei denen noch keine Vernetzung eintritt. Der Kautschukmischung kann als Verschnitt mindestens ein weiteres Dienelastomer zugesetzt werden, wie z.B. Polyisopren, Naturkautschuk oder Polybutadien.

In den Beispielen und Vergleichsbeispielen dieser Druckschrift werden Reifenlaufflächen miteinander verglichen, die aus Kautschukmischungen hergestellt wurden, die durch Emulsionspolymerisation herstelltes Styrol-Butadien-Copolymer (im folgenden Emulsions-SBR) und spezielle Kieselsäure oder klassische Kieselsäure oder Ruß als Füllstoff enthalten oder die durch Lösungspolymerisation hergestelltes Styrol-Butadien-Copolymer (im folgenden Lösungs-SBR) und spezielle Kieselsäure oder Ruß als Füllstoff enthalten. Aus den angegebenen Ergebnissen ist zu entnehmen, daß Laufflächen mit Emulsions-SBR und Ruß eine gute Lebensdauer unter Abrieb, aber einen schlechten Rollwiderstand haben, daß Laufflächen mit Emulsions-SBR und klassischer Kieselsäure schlechte Lebensdauer unter Abrieb, aber dafür einen guten Rollwiderstand haben und daß die in der EP 0 501 227 A1 beanspruchten Laufflächen, d.h. Laufflächen mit Lösungs-SBR und spezieller Kieselsäure sowohl beim Rollwiderstand als auch bei der Lebensdauer unter Abrieb gute Ergebnisse liefern.

Aufgabe der Erfindung ist die Bereitstellung von Kautschukmischungen, die in Reifenlaufflächen auch bereits mit klassischer Kieselsäure zu guten Ergebnissen bei der Abriebfestigkeit und dem Rollwiderstand führen.

Ausgehend von der eingangs genannten mit Schwefel vulkanisierbaren Kautschukmischung wird diese Aufgabe dadurch gelöst, daß die Kautschukmischung 30 bis 100 Gewichtsteile Isopren-Butadien-Styrol-Terpolymer mit einem Glasübergangstemperaturbereich zwischen -90°C und +20°C, und mit einem Gehalt von 5 bis 20 Gew.-% Isopren, 60 bis 80 Gew.-% Butadien und 15 bis 30 Gew.-% Styrol, 0 bis 70 Gewichtsteile eines oder mehrerer weiterer Elastomere sowie 20 bis 90 Gewichtsteile Kieselsäure als Füllstoff enthält, wobei alle Gewichtsteile jeweils auf 100 Gewichtsteile Gesamtelastomere bezogen sind.

Gegenstand der Erfindung sind ferner Reifenlaufflächen, die diese Kautschukmischung enthalten sowie Reifen, die solche mit Schwefel vulkanisierte Laufflächen aufweisen.

Überraschenderweise wurde gefunden, daß Kautschukmischungen mit dieser Zusammensetzung zu einer vergleichbaren Abriebfestigkeit wie die entsprechenden Kautschukmischungen, die nur Ruß als Füllstoff enthalten, führen, aber einen deutlich niedrigeren tan δ (Verlustfaktor) aufweisen als die entsprechenden Kautschukmischungen mit Ruß als Füllstoff. Ein niedriger tan δ korreliert mit einem niedrigen Rollwiderstand. Wie den Versuchsergebnissen der EP 0 501 227 Al zu entnehmen ist, wird der durch den Ersatz von Ruß durch klassische Kieselsäure erzielte verbesserte Rollwiderstand durch eine deutliche Verschlechterung der Abriebfestigkeit erkauft, sofern die Kautschukmischungen Emulsions-SBR oder Lösungs-SBR als Elastomer enthalten. Erfindungsgemäß wird eine Verschlechterung der Abriebfestigkeit selbst bei Verwendung von klassischer Kieselsäure vermieden, indem die Kautschukmischung 30 bis 100 Gewichtsteile Isopren-Butadien-Styrol-Terpolymer als Elastomer enthält, bezogen auf 100 Gewichtsteile Gesamtelastomere. Die erfindungsgemäße Kautschukmischung kann zur Herstellung von Reifenlaufflächen verwendet werden, die für Reifen von Personenkraftwagen, Motorrädern, 4 x 4 Geländefahrzeugen, Transportern und Leicht-Lastkraftwagen geeignet sind.

Der Glasübergangstemperaturbereich des erfindungsgemäß verwendeten Isopren-Butadien-Styrol-Terpolymers liegt zwischen -90°C und +20°C. Die Werte beziehen sich auf nach der Torsionspendel-Methode bestimmte Glasübergangstemperaturen.

Die erfindungsgemäße Kautschukmischung enthält vorzugsweise 50 bis 100 Gewichtsteile und besonders bevorzugt 70 bis 100 Gewichtsteile Terpolymer, bezogen auf 100 Gewichtsteile Gesamtelastomere.

Das Isopren des Terpolymers hat vorzugsweise einen 3,4-Isoprengehalt von 40 bis 60 % und das Butadien einen 1,2-Butadiengehalt von 20 bis 70 %. Besonders bevorzugt hat das Isopren des Terpolymers einen 3,4-Bindungsgehalt von 55 bis 60 Gew.-% und das Butadien einen 1,2-Bindungsgehalt von 25 - 35 Gew.-%.

Als weitere Elastomere können die erfindungsgemäßen Kautschukmischungen vorzugsweise 0 bis 50 Gewichtsteile NaturNaturkautschuk, 0 bis 50 Gewichtsteile durch Emulsionspolymerisation hergestelltes Copolymer aus konjugiertem Dien und vinylaromatischer Verbindung und/oder 0 bis 30 Gewichtsteile Polybutadien enthalten, wobei alle Gewichtsteile jeweils auf 100 Gewichtsteile Gesamtelastomere bezogen sind. Der Gesamtgehalt dieser weiteren Elastomere in den erfindungsgemäßen Kautschukmischung kann 0 bis 70 Gewichtsteile, bezogen auf 100 Gewichtsteile Gesamtelastomere, betragen. Als konjugiertes Dien des durch Emulsionspolymerisation hergestellten Copolymers sind 1,3-Butadien, Isopren und 2,3-Dimethyl-1,3-butadien geeignet. Als vinylaromatische Verbindung des Copolymers sind Styrol und o-, m-, und p-Methylstyrol geeignet. Bevorzugt ist das Copolymer Styrol-Butadien-Copolymer mit einer Glasübergangstemperatur zwischen -20°C und -70°C, bestimmt nach der Torsionspendel-Methode.

Als Polybutadiene werden vorzugsweise Polybutadiene mit hohem 1,4-cis-Bindungsgehalt, insbesondere über 90 %, eingesetzt.

Die Elastomere können in Form ölverstreckter Polymere eingesetzt werden. In der Regel kann der Gesamtölgehalt der Kautschukmischung d.h. freies Öl und Ölgehalt der Elastomere, im Bereich von 10 bis 50 Gewichtsteile je 100 Gewichtsteile Gesamtelastomere liegen.

Als Füllstoff enthält die erfindungsgemäße Kautschukmischung Kieselsäure in einer Menge von 20 bis 90 Gewichtsteile je 100 Gewichtsteile Gesamtelastomergehalt. Als Kieselsäure kann sowohl "klassische" Kieselsäure als auch Kieselsäure mit einer optimierten Dispergierbarkeit in der Kautschukmischung verwendet werden. Unter "klassischer" Kieselsäure ist Kieselsäure zu verstehen, wie sie üblicherweise zur Reifenherstellung verwendet wird und als Handelsprodukte von verschiedenen Herstellern angeboten wird. Üblicherweise haben diese Kieselsäuren eine BET-Oberfläche zwischen 100 und 250 m²/g nach DIN 66 131, ISO 5794/1 Annex D, eine CTAB-Oberfläche zwischen 100 und 250 m²/g nach ISO 6810, ASTM D-3765 und eine mit DBP gemessene Ölaufnahme zwischen 150 und 250 ml/100 g nach ISO S-4656, ASTM D-2414, DIN 53601. Als Kieselsäure mit optimierter Dispergierbarkeit kann zum Beispiel Kieselsäure verwendet werden, wie sie in der EP-0 157 703 B1 beschrieben ist.

Vorzugsweise enthält die Kautschukmischung 50 bis 80 Gewichtsteile Kieselsäure je 100 Gewichtsteile Gesamtelastomere.

Als weiteren Füllstoff kann die erfindungsgemäße Kautschukmischung Ruß enthalten. Der Rußgehalt sollte nicht höher als der Kieselsäuregehalt sein, und der Gesamtgehalt an Füllstoffen sollte nicht höher als 90 Gewichtsteile, bezogen auf 100 Gewichtsteile Gesamtelastomere, liegen. Zusätzlich kann Ruß im Verstärkungsmittel enthalten sein.

Als übliche Zusätze kann die erfindungsgemäße Kautschukmischung aromatische und/oder naphthenische Öle, Verstärkungsmittel, Alterungsschutzmittel, Tackifier, Aktivatoren und Verarbeitungshilfsmittel enthalten. Alle diese Zusätze werden in den üblichen Mengenbereichen eingesetzt. Wenn ein Teil der Kieselsäure durch Ruß ersetzt ist wird das Verstärkungsmittel in geringerer Menge zugesetzt. Ferner enthält die erfindungsgemäße Kautschukmischung ein Vulkanisationssystem mit Schwefel und Vulkanisationsbeschleunigern.

Die Kautschukmischung kann nach folgendem mehrstufigem Verfahren hergestellt werden. In einer ersten Stufe wird das Elastomer oder werden die Elastomere mit den üblichen Zusätzen und der Kieselsäure in einem Kneter gemischt. Die Temperatur soll dabei nicht auf Werte steigen, bei denen bereits eine Vernetzung einsetzt. Üblicherweise sollen Temperaturen von 160 bis 170°C nicht überschritten werden. Nach der Abkühlung der Mischung wird sie nochmals in einer zweiten Stufe geknetet, wobei wiederum die Temperatur nicht auf Werte steigen soll, bei denen eine Vernetzung stattfindet. In einer anschließenden dritten Stufe wird das Vulkanisationssystem auf einer Walze eingearbeitet, wobei auch hierbei Temperaturen unterhalb der Vernetzungstemperatur eingehalten werden. Die Zeiten für die Mischprozesse in den einzelnen Stufen sind jeweils so bemessen, daß eine gute Durchmischung der Bestandteile erreicht wird.

Die Erfindung wird an Hand der folgenden Beispielen näher erläutert.

Die Eigenschaften der erfindungsgemäßen Kautschukmischungen und der zu Vergleichszwecken hergestellten Kautschukmischungen wurden an aus den Mischungen jeweils hergestellten vulkanisierten Probekörpern bestimmt. Zur Bestimmung des Verlustfaktors (tan δ ) wird auf DIN 53513 verwiesen. Der Abrieb wurde nach DIN 53516 bestimmt.

Es wurden fünf Kautschukmischungen mit den in der folgenden Tabelle angegebenen Zusammensetzungen hergestellt, wobei jeweils die Gewichtsteile der Komponenten in den Mischungen angegeben sind. Die Mischungen 1 bis 3 sind erfindungemäße Mischungen, die Mischungen 4 und 5 sind Vergleichsmischungen.

**Tabelle**

| KAUTSCHUKMISCHUNG | 1 | 2 | 3 | 4 | 5 |
|---|---|---|---|---|---|
| Bestandteile | | | | | |
| Terpolymer 1 | 100 | | 100 | 100 | |
| Terpolymer 2 | | 100 | | | 100 |
| Kieselsäure VN3 | 65 | 65 | 32,5 | | |
| Ruß N 234 | | | 32,5 | 65 | 65 |
| Verstärkungsmittel | 10,4 | 10,4 | 5,2 | | |
| Zinkoxid | 3 | 3 | 3 | 3 | 3 |
| Stearinsäure | 2 | 2 | 2 | 2 | 2 |
| Aromatisches Öl | 16 | 16 | 16 | 16 | 16 |
| Alterungsschutzmittel | 2 | 2 | 2 | 2 | 2 |
| Tackifier | 1,5 | 1,5 | 1,5 | 1,5 | 1,5 |
| Vulkanisationsbeschleuniger A | 1,7 | 1,7 | 1,7 | 1,3 | 1,3 |
| Vulkanisationsbeschleuniger B | 1,5 | 1,5 | 1,5 | 0,3 | 0,3 |

**Tabelle**

| KAUTSCHUKMISCHUNG | 1 | 2 | 3 | 4 | 5 |
|---|---|---|---|---|---|
| Schwefel | 1,4 | 1,4 | 1,4 | 1,7 | 1,7 |
| Bezugswerte zum gemessenen tan δ bei 70°C | 140 | 142 | 120 | 100 | 103 |
| Lebensdauer unter Abrieb | 102 | 101 | 99 | 100 | 99 |

Die in obiger Tabelle angegebenen Bestandteile werden im folgenden erläutert:
Terpolymer 1: Isopren-Butadien-Styrol-Terpolymer mit einem Glasübergangstemperaturbereich von -90 °C bis +20°C.
Terpolymer 2: Isopren-Butadien-Styrol-Terpolymer mit einem Glasübergangstemperaturbereich von -90°C bis 20°C.

Die Terpolymere unterscheiden sich durch ihren molekularen Aufbau infolge der Prozeßführung während der Polymerisation.

Kieselsäure VN3: BET-Oberfläche 170 m²/g, Handelsprodukt der Degussa Ultrasil^{R} VN3 Granulat.

Ruß N 234: BET-Oberfläche 125 m²/g, bestimmt nach ISO S-4652, ASTM D-3037, DIN 66132; CTAB-Oberfläche 120 m²/g, bestimmt nach ISO 6810, ASTM D-3765; DBP-Absorption 125 ml/100 g, bestimmt nach ISO S-4656, ASTM D-2414, DIN 53601.

Verstärkungsmittel: Mischung im Verhältnis 1:1 von Ruß N 330 und polysulfidischem Organosilan, Handelsprodukt der Degussa X 50-S.

Alterungsschutzmittel: Gemischte Di-aryl-p-phenylendiamine.

Tackifier: Kondensationsprodukte aus p-tert.-Octylphenol und Formaldehyd.

Vulkanisationsbeschleuniger A: CBS (N-Cyclohexyl-2-benzothiazolsulfenamid).

Vulkanisationsbeschleuniger B: DPG (N,N'-Diphenylguanidin).

Die Kautschukmischungen 1 bis 5 wurden jeweils folgendermaßen hergestellt. In einen Kneter mit einer Knetertemperierung von 50°C und einer Kneterdrehzahl von 50 pro min wurde in einer ersten Stufe das Terpolymer gegeben und geknetet. Dann wurden Zinkoxid, Stearinsäure, Alterungsschutzmittel und Tackifier zugegeben und eingeknetet. Anschließend wurden jeweils die Hälfte der Kieselsäure, des Verstärkungsmittels und des aromatischen Öls im Fall der Mischungen 1 und 2 jeweils die Hälfte der Kieselsäure, des Rußes, des Verstärkungsmittels und des aromatischen Öls in Fall der Mischung 3 sowie jeweils die Hälfte des Rußes und des aromatischen Öls im Fall der Mischungen 4 und 5 zugegeben und eingeknetet. Schließlich wurde jeweils die zweite Hälfte der eben genannten Bestandteile zugegeben und eingeknetet. Bei dem gesamten Mischprozeß wurde eine maximale Temperatur von 160°C eingehalten.

Nach Abkühlung der Mischungen wurde in einer zweiten Stufe nochmals geknetet, wobei wiederum eine Temperatur von 160°C nicht überschritten wurde. Die zweite Stufe wurde nur bei den Kautschukmischungen 1 bis 3 durchgeführt, dagegen nicht bei den Rußmischungen. Schließlich wurde in einer dritten Stufe (bei den Mischungen 4 und 5 die zweite Stufe) das Vulkanisationssystem aus Schwefel und Vulkanisationsbeschleunigern auf einer Walze eingemischt. Auch hierbei wurde eine Temperatur unterhalb der Vernetzungstemperatur eingehalten.

An den aus den Kautschukmischungen hergestellten Probekörpern wurden Abrieb und Verlustfaktor tan δ bestimmt. Den für die Kautschukmischung 4 gemessenen Werten wurde der Wert 100 zugeordnet, und die für die anderen Kautschukmischungen gemessenen Werte wurden jeweils als Relativwerte gegenüber dem Bezugswert 100 in der Tabelle angegeben. Werte über 100 bedeuten eine Verbesserung der Eigenschaften.

Wie den in der Tabelle angegebenen Werten zu entnehmen ist, ist die Lebensdauer unter Abrieb bei den erfindungsgemäßen Kautschukmischungen etwa vergleichbar mit der Lebensdauer unter Abrieb der entsprechenden Kautschukmischungen, die statt Kieselsäure nur Ruß enthalten. Dies ist nicht zu erwarten gewesen, da nach den Angaben der EP 0 501 227 A1 der Ersatz von Ruß durch Kieselsäure zu einer wesentlichen Verschlechterung der Lebensdauer unter Abrieb führt, sofern die Kautschukmischung Emulsions-SBR enthält. Mit der erfindungsgemäßen Kautschukmischung wird somit eine starke Verbesserung des tan δ erreicht, der mit dem Rollwiderstand korreliert, ohne daß die Lebensdauer unter Abrieb verschlechtert wird.

## Patentansprüche

1. Mit Schwefel vulkanisierbare Kautschukmischung, die mindestens ein Elastomer, mindestens einen Füllstoff, übliche Zusätze sowie ein Vulkanisationssystem enthält, dadurch gekennzeichnet, daß die Kautschukmischung 30 bis 100 Gewichtsteile Isopren-Butadien-Styrol-Terpolymer mit einem Glasübergangstemperaturbereich zwischen -90°C und +20°C und mit einem Gehalt von 5 bis 20 Gew.-% Isopren, 60 bis 80 Gew.-% Butadien und 15 bis 30 Gew.-% Styrol, 0 bis 70 Gewichtsteile eines oder mehrerer weiterer Elastomere sowie 20 bis 90 Gewichtsteile Kieselsäure als Füllstoff enthält, wobei alle Gewichtsteile jeweils auf 100 Gewichtsteile Gesamtelastomere bezogen sind.

2. Kautschukmischung nach Anspruch 1, dadurch gekennzeichnet, daß das Isopren des Terpolymers einen 3,4-Bindungsgehalt von 40 bis 60 Gew.-% und das Butadien einen 1,2-Bindungsgehalt von 20 bis 70 Gew.-% hat.

3. Kautschukmischung nach Anspruch 2, dadurch gekennzeichnet, daß das Isopren des Terpolymers einen 3,4-Bindungsgehalt von 55 bis 60 Gew.-% und das Butadien einen 1,2-Bindungsgehalt von 25 bis 35 Gew.-% hat.

4. Kautschukmischung nach einem der Ansprüche 1 bis 3, dadurch gekennzeichnet, daß sie 50 bis 100 Gewichtsteile Isopren-Butadien-Styrol-Terpolymer, bezogen auf 100 Gewichtsteile Gesamtelastomere, enthält.

5. Kautschukmischung nach einem der Ansprüche 1 bis 4, dadurch gekennzeichnet, daß sie als weitere Elastomere 0 bis 50 Gewichtsteile Naturkautschuk, 0 bis 50 Gewichtsteile durch Emulsionspolymerisation hergestelltes Copolymer aus konjugiertem Dien und vinylaromatischer Verbindung und/oder 0 bis 30 Gewichtsteile Polybutadien enthält, wo_ bei alle Gewichtsteile jeweils auf 100 Gewichtsteile Gesamtelastomere bezogen sind.

6. Kautschukmischung nach Anspruch 5, dadurch gekennzeichnet, daß sie durch Emulsionspolymerisation hergestelltes Styrol-Butadien-Copolymer mit einer Glasübergangstemperatur zwischen -20°C und -70°C enthält.

7. Kautschukmischung nach einem der Ansprüche 1 bis 6, dadurch gekennzeichnet, daß die Kieselsäure eine BET-Oberfläche zwischen 150 und 250 m²/g aufweist.

8. Kautschukmischung nach einem der Ansprüche 1 bis 7, dadurch gekennzeichnet, daß sie als weiteren Füllstoff Ruß enthält, wobei der Rußgehalt höchstens gleich groß ist wie der Kieselsäureanteil.

9. Kautschukmischung nach einem der Ansprüche 1 bis 8, dadurch gekennzeichnet, daß sie 50 bis 80 Gewichtsteile Kieselsäure, bezogen auf 100 Gewichtsteile Gesamtelastomere, enthält.

10. Reifenlauffläche, dadurch gekennzeichnet, daß sie eine mit Schwefel vulkanisierbare Kautschukmischung nach einem der Ansprüche 1 bis 9 enthält.

11. Reifen, dadurch gekennzeichnet, daß er eine mit Schwefel vulkanisierte Lauffläche nach Anspruch 10 enthält.

## Claims

1. Rubber mixture vulcanisable with sulphur and containing at least one elastomer, at least one filler, customary additives and also a vulcanisation system, characterised in that the rubber mixture contains 30 to 100 parts by weight of isoprene-butadiene-styrene-terpolymer with a glass transition temperature range between -90°C and +20°C, and with a content of 5 to 20% by weight of isoprene, 60 to 80% by weight of butadiene and 15 to 30% by weight of styrene, 0 to 70 parts by weight of one or more further elastomers and also 20 to 90 parts by weight of silica as filler, with all parts by weight being respectively related to 100 parts by weight of total elastomers.

2. Rubber mixture in accordance with claim 1, characterised in that the isoprene of the terpolymer has a 3,4-bond content of 40 to 60% by weight and the butadiene has a 1,2-bond content of 20 to 70% by weight.

3. Rubber mixture in accordance with claim 2, characterised in that the isoprene of the terpolymer has a 3,4-bond content of 55 to 60% by weight and the butadiene has a 1,2-bond content of 25 to 35% by weight.

4. Rubber mixture in accordance with one of the claims 1 to 3, characterised in that it contains 50 to 100 parts by weight of isoprene-butadiene-styrene-terpolymer related to 100 parts by weight of total elastomers.

5. Rubber mixture in accordance with one of the claims 1 to 4, characterised in that it contains as further elastomers 0 to 50 parts by weight of natural rubber, 0 to 50 parts by weight of copolyer of conjugated diene and vinyl aromatic compound manufactured by emulsion polymerisation and/or 0 to 30 parts by weight polybutadiene, whereby all parts by weight are respectively related to 100 parts by weight of total elastomers.

6. Rubber mixture in accordance with claim 5, characterised in that it contains styrene-butadiene-copolymer manufactured by emulsion polymerisation and having a glass transition temperature between -20°C and -70°C.

7. Rubber mixture in accordance with one of the claims 1 to 6, characterised in that the silica has a BET surface between 150 and 250 m²/g.

8. Rubber mixture in accordance with one of the claims 1 to 7, characterised in that it contains carbon black as a further filler material, with the carbon black content being least as large as the proportion of silica.

9. Rubber mixture in accordance with one of the claims 1 to 8, characterised in that it contains 50 to 80 parts by weight of silica related to 100 parts by weight of total elastomers.

10. Tyre tread, characterised in that it contains a rubber mixture vulcanisable with sulphur in accordance with one of the claims 1 to 9.

11. Tyre, characterised in that it contains a tread in accordance with claim 10 and vulcanised with sulphur.

## Revendications

1. Composition de caoutchouc qui est vulcanisable au soufre et contient au moins un élastomère, au moins une charge, des additifs habituels ainsi qu'un système de vulcanisation, caractérisée par le fait que la composition de caoutchouc contient de 30 à 100 parties en poids d'un terpolymère isoprène-butadiène-styrène d'une plage de température de transition vitreuse entre -90°C et +20°C et d'une teneur de 5 à 20% en poids d'isoprène, de 60 à 80% en poids de butadiène et de 15 à 30% en poids de styrène, de 0 à 70 parties en poids d'un ou plusieurs autres élastomères ainsi que de 20 à 90 parties en poids de silice comme charge, toutes les parties en poids étant chacune rapportées à 100 parties en poids du total des élastomères.

2. Composition de caoutchouc selon la revendication 1, caractérisée par le fait que l'isoprène du terpolymère a une teneur en liaison 3, 4 de 40 à 60% en poids et que le butadiène a une teneur en liaison 1,2 de 20 à 70% en poids.

3. Composition de caoutchouc selon la revendication 2, caractérisée par le fait que l'isoprène du terpolymère a une teneur en liaison 3, 4 de 45 à 60% en poids et que le butadiène a une teneur en liaison 1,2 de 25 à 35% en poids.

4. Composition de caoutchouc selon l'une des revendications 1 à 3, caractérisée par le fait qu'elle contient de 50 à 100 parties en poids du terpolymère isoprène-butadiène-styrène, rapporté à 100 parties en poids du total des élastomères.

5. Composition de caoutchouc selon l'une des revendications 1 à 4, caractérisée par le fait que comme autres élastomères elle contient de 0 à 50 parties en poids de caoutchouc naturel, de 0 à 50 parties en poids d'un copolymère fabriqué par polymérisation d'émulsion et constitué d'un diène à doubles liaisons conjuguées et d'un composé vinylaromatique et/ou de 0 à 30 parties en poids de polybutadiène, toutes les parties en poids étant chacune rapportées à 100 parties en poids du total des élastomères.

6. Composition de caoutchouc selon la revendication 5, caractérisée par le fait qu'elle contient un copolymère styrène-butadiène fabriqué par polymérisation d'émulsion, d'une température de transition vitreuse entre -20°C et -70°C.

7. Composition de caoutchouc selon l'une des revendications 1 à 6, caractérisée par le fait que la silice présente une surface BET/mesurée selon la méthode Brunauer-Emett-Teller valant entre 150 et 200 m²/g.

8. Composition de caoutchouc selon l'une des revendications 1 à 7, caractérisée par le fait que comme autre charge elle contient du noir de fumée, la teneur en noir de fumée étant au maximum aussi grande que la teneur en silice.

9. Composition de caoutchouc selon l'une des revendications 1 à 8, caractérisée par le fait qu'elle contient de 50 à 80 parties en poids de silice, rapporté à 100 parties en poids du total des élastomères.

10. Bande de roulement de pneumatique caractérisée par le fait qu'elle contient une composition de caoutchouc, vulcanisable au soufre, conforme a l'une des revendications 1 à 9.

11. Pneumatique caractérisé par le fait qu'il contient une bande de roulement vulcanisé au soufre, conforme à la revendication 10.
